# EUROPÄISCHE PATENTSCHRIFT

(11) **EP 3 579 082 B1**
(45) Veröffentlichungstag und Bekanntmachung des Hinweises auf die Patenterteilung: **19.07.2023**
(21) Anmeldenummer: 19173217.1
(22) Anmeldetag: 08.05.2019
(51) Int. Cl.: G06F 3/01

(54) **VERFAHREN ZUM ERKENNEN EINER EINGABE**
METHOD FOR RECOGNIZING AN INPUT
PROCÉDÉ DE DÉTECTION D'UNE ENTRÉE

(30) Priorität: 06.06.2018 DE 102018208866
(43) Veröffentlichungstag der Anmeldung: 11.12.2019
(73) Patentinhaber: Audi AG, 85045 Ingolstadt (DE)
(72) Erfinder: Müller, Frank, 90537 Feucht (DE)
(74) Vertreter: RDL Patentanwälte PartG mbB

(56) Entgegenhaltungen:
- US-A1- 2013 155 237
- US-A1- 2015 370 333

## Beschreibung

Die Erfindung betrifft ein Verfahren und ein System zum Erkennen einer Eingabe einer Person.

Zur Eingabe eines Befehls kann eine Person einen Schalter betätigen. Allerdings ist auch möglich, einen derartigen Befehl auf Grundlage einer Geste der Person zu erkennen, wobei die Geste der Person von einem Sensor erfasst wird. Allerdings sollte hierbei gewährleistet sein, dass die Geste von dem Sensor zuverlässig erfasst wird.

Ein System und ein Verfahren zum Erfassen einer Eingabegeste eines Nutzers sind aus der Druckschrift DE 10 2016 204 274 A1 bekannt.

Die Druckschrift US 2013 155237 A1 betrifft eine Maßnahme zur Interaktion mit einem mobilen Gerät innerhalb eines Fahrzeugs unter Nutzung von Gesten.

Vor diesem Hintergrund war es eine Aufgabe, eine Geste durch einen Sensor zuverlässig zu erfassen und darüber eine der Geste zugeordnete Eingabe bzw. einen der Geste zugeordneten Befehl zu erkennen.

Diese Aufgabe wird durch ein Verfahren und ein System mit den Merkmalen der unabhängigen Patentansprüche gelöst. Ausführungsformen des Verfahrens und des Systems gehen aus den abhängigen Patentansprüchen hervor.

Das erfindungsgemäße Verfahren ist zum Erkennen einer Eingabe, bspw. eines Befehls, einer Person durch einen bzw. mit einem bspw. optischen Sensor vorgesehen. Dabei wird die Eingabe durch mindestens eine Geste der Person realisiert und somit optisch dargestellt, wobei die mindestens eine Geste von dem Sensor zu erfassen ist. Hierbei wird eine erste Geste, üblicherweise unter einer Anzahl von mehreren Gesten, zum Erkennen der Eingabe appliziert und/oder definiert, d. h. der Eingabe bzw. einem mit der Eingabe assoziierten Befehl zugeordnet. Die erste Geste ist im Sensor und/oder in einem für den Sensor zugänglichen Speicher mit Zuordnung zur Eingabe bzw. zum damit assoziierten Befehl hinterlegt und kann im störungsfreien Betrieb des Sensors von dem Sensor, üblicherweise in einem von dem Sensor zu erfassenden bzw. erfassbaren Bereich als Bild bzw. Abbild, optisch erfasst werden. Bei dem Verfahren wird eine Funktionstüchtigkeit des Sensors zum Erfassen der ersten Geste überprüft. Falls die Funktionstüchtigkeit zum Erfassen der ersten Geste durch den Sensor nicht oder nicht mehr gegeben ist, wird zum Erkennen der Eingabe alternativ eine zweite Geste ausgewählt, die der Eingabe im Vorfeld bereits zugeordnet ist oder in Folge einer Auswahl zugeordnet wird, wobei zum Erkennen der Eingabe durch den Sensor von der ersten Geste auf die zweite Geste sensorintern, insbesondere automatisch umgeschaltet wird. Der zu erkennenden Eingabe bzw. einem entsprechenden Befehl bzw. einer entsprechenden Funktion wird zunächst die erste Geste und, falls deren Erfassen nicht mehr fehlerfrei möglich ist, danach die alternative zweite Geste zugeordnet, die sich von der ersten Geste unterscheidet. Der zu erkennenden Eingabe sind originär bereits mehrere Gesten, insbesondere die erste und die zweite Geste, zugeordnet, wobei zunächst aber nur die erste Geste zum Erkennen der Eingabe aktiv geschaltet ist und erst, wenn die erste Geste nicht mehr ausreichend zuverlässig erfasst werden kann, die zweite Geste aktiv geschaltet wird, während die erste Geste inaktiv geschaltet wird.

Von dem Sensor werden Signale erzeugt, wobei jeder Geste ein Signal zugeordnet wird, wobei eine Qualität der Signale, insbesondere eine Qualität eines ersten Signals, das der ersten Geste zugeordnet ist bzw. wird, kontrolliert und/oder überprüft wird. Anhand der Qualität des ersten Signals wird ermittelt, ob die Funktionstüchtigkeit des Sensors zum Erfassen der ersten Geste gegeben ist oder nicht.

Außerdem wird die zweite Geste definiert, wobei der zweiten Geste ein zweites Signal zugeordnet wird bzw. ist.

Dabei ist es möglich, dass die zweite Geste aus einer Anzahl vorgegebener Gesten ausgewählt wird, wobei der zweiten Geste das zweite Signal zugeordnet wird.

Bei dem Verfahren wird berücksichtigt, dass die Funktionstüchtigkeit des Sensors von Umwelteinflüssen, die auf den Sensor wirken, abhängig ist, wobei anhand eines aktuell herrschenden Umwelteinflusses, der auf den Sensor wirkt, ermittelt wird, ob die Funktionstüchtigkeit des Sensors zum Erfassen der ersten Geste gegeben ist oder nicht. Dabei ist zum Erkennen der Umwelteinflüsse ein zusätzlicher Umweltsensor zu verwenden.

Das erfindungsgemäße System ist zum Erkennen einer Eingabe einer Person mit einem Sensor des Systems ausgebildet, der wiederum dazu ausgebildet ist, die Eingabe, bspw. einen Befehl, durch Erfassen mindestens einer von der Person ausgeführten Geste, die der Eingabe zugeordnet ist, zu erkennen, wobei eine erste Geste, üblicherweise unter einer Anzahl von mehreren Gesten, der Eingabe zugeordnet ist und appliziert wird. Der Sensor ist dazu ausgebildet, die erste Geste optisch zu erfassen. Das System ist dazu ausgebildet, eine Funktionstüchtigkeit des Sensors zum Erfassen der ersten Geste zu überprüfen, wobei für den Fall, dass die Funktionstüchtigkeit zum Erfassen der ersten Geste nicht gegeben ist, das System dazu ausgebildet ist, alternativ eine zweite Geste auszuwählen, der Eingabe zuzuordnen und zum Erkennen der Eingabe durch den Sensor von der ersten Geste auf die zweite Geste sensorintern, insbesondere automatisch umzuschalten.

Das System weist in Ausgestaltung eine Recheneinheit auf, die mit dem Sensor verbunden ist, wobei der Sensor dazu ausgebildet ist, Signale zu erzeugen und an die Recheneinheit zu übermitteln. Dabei ist die Recheneinheit dem Sensor zugeordnet und evtl. in demselben Gehäuse wie der Sensor angeordnet.

Die Recheneinheit ist dazu ausgebildet, eine Qualität von Signalen, die ihr von dem Sensor übermittelt werden, zu kontrollieren und/oder zu überprüfen und weiterhin anhand von Signalen, die der Sensor in Reaktion auf ein Erfassen der ersten Geste erzeugt und an die Recheneinheit übermittelt, zu entscheiden, ob die Funktionstüchtigkeit des Sensors zum Erfassen der ersten Geste gegeben ist oder nicht. Dabei ist es möglich, dass jeweils ein derartiges Signal ein Abbild des von dem Sensor zu erfassenden bzw. zu erkennenden Bereichs und einer in dem Bereich realisierten bzw. dargestellten Geste bereitstellt. Dabei ist es weiterhin möglich, den Bereich in mehrere Teilbereiche zu unterteilen bzw. aufzuteilen, wobei sich mindestens zwei derartige Teilbereiche räumlich bzw. positionsabhängig voneinander unterscheiden, wobei es auch möglich ist, dass sich die mindestens zwei Teilbereiche zumindest partiell überschneiden können.

Außerdem ist es möglich, dass die Recheneinheit dazu ausgebildet ist, die zweite Geste auszuwählen und den Sensor von der ersten Geste auf die zweite Geste umzuschalten.

Das System ist bspw. für ein Kraftfahrzeug, insbesondere ein Auto, ausgebildet.

Mit dem Sensor und/oder der Recheneinheit wird ein Algorithmus durchgeführt, mit dem Gesten erfasst und voneinander unterschieden werden. Mit diesem Algorithmus werden auch jeweilige Signale in Reaktion auf ein jeweiliges Erfassen von jeweiligen Gesten erzeugt und weiterhin deren Qualität kontrolliert.

In Ausgestaltung ist der Sensor einem Innenraum des Fahrzeugs zugeordnet und dazu ausgebildet, eine Geste einer Person in dem Innenraum zu erfassen und/oder zu erkennen.

Mit dem Verfahren und dem System ist eine Umschaltung zwischen von mit einem optischen Sensor zu erfassenden Gesten in einem Fahrzeug, bspw. einem Kraftfahrzeug bzw. einem Auto, möglich.

Der üblicherweise im Fahrzeug angeordnete optische Sensor weist zum Erfassen und Erkennen einer Eingabe, bspw. eines Befehls, in einem auf ihm installierten Algorithmus eine bestimmte definierte bzw. applizierte erste Geste auf, die dieser Eingabe zugeordnet ist. Dabei kann die Geste eine Bewegung eines Körperteils, bspw. eine Bewegung des Kopfs, der Hand oder eines Fußes, bspw. ein Tritt auf eine Oberfläche, bspw. einen Boden, sein. Allerdings ist aufgrund von Umwelteinflüssen, bspw. aufgrund von Schmutz, Wasser, einer starken Sonneneinstrahlung usw., der Sensor nicht mehr in der Lage, die applizierte erste Geste zu erfassen bzw. korrekt zu erfassen, weshalb die Gefahr besteht, dass die Funktionstüchtigkeit des Sensors zum Erkennen der Eingabe auf Grundlage der erfassten applizierten ersten Geste nicht mehr gegeben ist, da der Sensor die applizierte erste Geste nicht mehr korrekt erfassen und/oder observieren bzw. registrieren kann, so dass die damit verbundene Eingabe nicht mehr erkannt werden kann. Dabei wird von dem Sensor in Reaktion auf die erste Geste entweder kein Signal mehr erzeugt und wiedergegeben oder ein gegenüber dem originären der ersten Geste zugeordneten Signal gestörtes Signal ausgegeben.

Im Rahmen des mit dem System durchführbaren Verfahrens wird eine Beeinflussung des Sensors bzw. dessen Funktionsfähigkeit von dem Sensor, bspw. selbstkontrollierend, und/oder von einer Recheneinheit bzw. einem Steuergerät erkannt, was bspw. dann möglich ist, wenn von dem Sensor ein dauerhaft gestörtes Signal bereitgestellt wird. In diesem Fall wird von der ersten ursprünglich zu erkennenden Geste auf die zweite alternative Geste umgeschaltet. Das bedeutet, dass in dem in dem Sensor hinterlegten und bei Betrieb des Sensors ablaufenden Algorithmus die erste Geste durch die zweite Geste ausgetauscht wird, d. h. die erste Geste wird inaktiv und die zweite Geste aktiv geschaltet. In einer möglichen Ausgestaltung umfasst eine erste Geste einen Kick bzw. Tritt auf einen ersten Punkt und/oder eine erste Markierung in dem von dem Sensor zu erfassenden bzw. erfassbaren Bereich, wobei die erste Markierung vor dem Sensor angeordnet ist, und einen ersten definierbaren bzw. definierten Abstand zu dem Sensor aufweist und von dem Sensor zu erfassen bzw. erfassbar ist. Entsprechend umfasst eine zweite Geste einen Kick bzw. Tritt auf einen zweiten Punkt und/oder eine zweite Markierung, wobei die zweite Markierung vor dem Sensor angeordnet ist, und einen zweiten definierbaren bzw. definierten Abstand zu dem Sensor aufweist und von dem Sensor zu erfassen bzw. erfassbar ist. Dabei ist es möglich, die zweite alternative Geste im Rahmen einer Auslegung des Sensors und seiner Position bzw. Positionierung relativ zu der zweiten Markierung und relativ zu der ersten Markierung geeignet räumlich bzw. positionsabhängig zu definieren und/oder zu applizieren.

In möglicher Ausgestaltung kann hierbei ein für die erste Geste vorgesehenes Soll-Abbild des Bereichs, das von dem Sensor zu erfassen ist, wenn dieser nicht verschmutzt ist, mit einem aktuell erfassten Ist-Abbild des Bereichs verglichen werden. Somit erkennt der Sensor und/oder die Recheneinheit im Fall einer Verschmutzung durch Umwelteinflüsse, bspw. auch aufgrund von Feuchtigkeit, kein klares Abbild bzw. kein Soll-Abbild, insbesondere kein klar bewertbares Abbild, für die erste Geste in dem Bereich bzw. innerhalb des Bereichs. Weiterhin wird überprüft, ob ein Soll-Abbild für mindestens eine zweite Geste innerhalb des Bereichs erfasst werden kann. Folglich wird nur auf eine in dem Bereich zuverlässig erfassbare Geste aus einer Auswahl mehrerer zweiter Gesten umgeschaltet. Hierbei ist es möglich, dass unterschiedliche Gesten in unterschiedlichen räumlichen Teilbereichen des von dem Sensor erfassbaren Bereichs darzustellen bzw. darstellbar sind. Dabei ist für jeweils eine Geste ein Soll-Abbild innerhalb eines jeweiligen Teilbereichs des gesamten Bereichs vorgesehen. Somit umfasst bspw. ein erster Teilbereich eine erste Position, an der die erste Geste darzustellen und zu erfassen ist. Entsprechend umfasst ein zweiter Teilbereich eine zweite Position, an der die zweite Geste dazustellen und zu erfassen ist.

Der optische Sensor umfasst in Ausgestaltung ein optisches Element, bspw. ein transparentes Fenster, durch das Licht von außen empfangen und erfasst wird, wobei einzelne Teilbereiche des Bereichs durch unterschiedliche Abschnitte des optischen Elements hindurch erfasst werden. Dabei wird mit dem Sensor durch einen ersten Abschnitt des optisch transparenten Elements hindurch der erste Teilbereich optisch erfasst, in dem von der Person die erste Geste, in der Regel eine damit verbundene erste Bewegung, für den Sensor erfassbar ausgeführt wird. Entsprechend wird mit dem Sensor durch einen zweiten Abschnitt des optisch transparenten Elements hindurch der zweite Teilbereich mit der darin darstellbaren zweiten Geste bzw. eine damit verbundene zweite Bewegung erfasst. Somit ist jede Geste einem Teilbereich zugeordnet und durch einen jeweiligen Abschnitt erfassbar. Dabei unterscheiden sich diese Abschnitte voneinander räumlich, wobei es möglich ist, dass sich die Abschnitte zumindest partiell überschneiden können. Falls der Sensor, insbesondere dessen transparentes Fenster, durch Umwelteinflüsse verschmutzt ist, kann aufgrund einer derartigen Verschmutzung von dem Sensor zumindest durch einen Abschnitt des transparenten Elements hindurch kein klares Abbild bzw. Bild des zu scannenden Bereichs, insbesondere Teilbereichs, und mindestens einer darin zu realisierenden bzw. darzustellenden Geste mehr erfasst werden.

Die Verschmutzung des optischen Sensors ist durch ein Messgerät bzw. einen weiteren Umweltsensor für Umwelteinflüsse als Komponente des Systems messbar und wird der Person von einer Mensch-Maschine-Schnittstelle (man-machine-interface, MMI) optisch und/oder akustisch angezeigt. Dabei kann der Person von der Mensch-Maschine-Schnittstelle ergänzend eine Aufforderung zur Reinigung des optischen Sensors angezeigt werden. Eine bspw. automatische Umschaltung von der ersten Geste auf die zweite Geste kann mit einer Erkennung der Verschmutzung und/oder mit der Aufforderung zur Reinigung automatisch verknüpft werden.

Das Verfahren ist dann durchführbar, wenn der erste Teilbereich zum Darstellen der ersten Geste von dem Sensor schlechter als der zweite Teilbereich zum Darstellen der zweiten Geste erfasst werden kann.

Durch Umschalten zwischen zwei zu erkennenden Gesten bei dem Verfahren kann die Funktionstüchtigkeit des Sensors zum Erkennen der Eingabe auf Grundlage einer Geste durch eine Person und somit durch einen Kunden auch dann gewährleistet werden, wenn die ursprüngliche erste Geste nicht mehr erkannt bzw. nicht mehr eindeutig erfasst werden kann.

Bei dem Verfahren werden nach Applikation der regulären ersten Geste diverse Umwelteinflüsse ausgetestet. Falls ein Ausfall des Sensors, insbesondere hinsichtlich der Erkennung der ersten Geste, nachgewiesen wird, wird unter Berücksichtigung der noch zur Verfügung stehenden Signale die alternative zweite Geste definiert. Von der ursprünglichen ersten Geste, die ursprünglich zu erkennen ist, wird nachfolgend bzw. bei Bedarf, wenn im Realbetrieb des Sensors ein derartiger Ausfall des Sensors zur korrekten Erfassung der ersten Geste festgestellt wird, auf die zweite alternative Geste umgeschaltet.

In alternativer oder ergänzender Ausgestaltung werden von dem Sensor Abbilder bzw. Bilder erzeugt, wobei jeder Geste ein Abbild in von dem Sensor erfassten Bereich, bspw. in einem für die jeweilige Geste vorgesehenen Teilbereich, zugeordnet wird, wobei eine Qualität der Abbilder, insbesondere eine Qualität eines ersten Abbilds, das der ersten Geste bspw. in dem ersten Teilbereich zugeordnet ist bzw. wird, kontrolliert und/oder überprüft wird. Anhand der Qualität des ersten Abbilds wird ermittelt, ob die Funktionstüchtigkeit des Sensors zum Erfassen der ersten Geste gegeben ist oder nicht. Außerdem wird die zweite Geste definiert, wobei der zweiten Geste bspw. in dem zweiten Teilbereich ein zweites Abbild zugeordnet wird.

Die Recheneinheit ist dazu ausgebildet, eine Qualität von Abbildern, die ihr von dem Sensor übermittelt werden, zu kontrollieren und/oder zu überprüfen und weiterhin anhand von Abbildern, die der Sensor in Reaktion auf ein Erfassen der ersten Geste erzeugt und an die Recheneinheit übermittelt, zu entscheiden, ob die Funktionstüchtigkeit des Sensors zum Erfassen der ersten Geste gegeben ist oder nicht.

Mit dem Sensor und/oder der Recheneinheit wird ein Algorithmus durchgeführt, mit dem Gesten erkannt und voneinander unterschieden werden. Mit diesem Algorithmus werden auch jeweilige Abbilder in Reaktion auf ein jeweiliges Erfassen von jeweiligen Gesten erzeugt und weiterhin deren Qualität kontrolliert.

Dabei wird von dem Sensor in Reaktion auf die erste Geste entweder kein Abbild mehr erzeugt und wiedergegeben oder ein gegenüber dem originären der ersten Geste zugeordneten Signal gestörtes Abbild ausgegeben.

Im Rahmen des mit dem System durchführbaren Verfahrens wird eine Beeinflussung des Sensors von dem Sensor oder einem Steuergerät erkannt, was bspw. dann möglich ist, wenn von dem Sensor ein dauerhaft gestörtes Abbild bereitgestellt wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

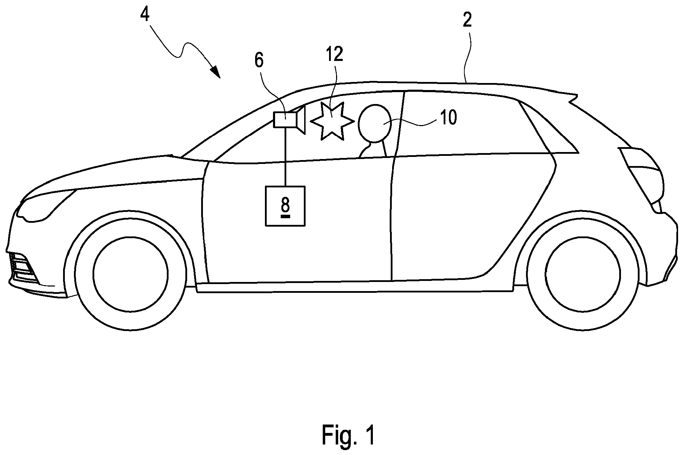

Figur 1 zeigt in schematischer Darstellung eine Ausführungsform des erfindungsgemäßen Systems.

Figur 1 zeigt in schematischer Darstellung ein Kraftfahrzeug 2, in dessen Innenraum die Ausführungsform des erfindungsgemäßen Systems 4 zum Durchführen einer Ausführungsform des erfindungsgemäßen Verfahrens angeordnet ist. Dabei umfasst das System 4 einen optischen Sensor 6 und eine Recheneinheit 8, die kommunikationstechnisch miteinander verbunden sind. Figur 1 zeigt auch eine Person 10 in dem Innenraum des Fahrzeugs 2.

Der Sensor 6 ist dazu ausgebildet, in einem Bereich des Innenraums eine von der Person 10 dargestellte erste Geste zu erfassen, wobei der Bereich in verschiedene Teilbereiche unterteilt ist, wobei sich die Teilbereiche positionsabhängig bzw. räumlich voneinander unterscheiden. Dabei ist die erste Geste in Figur 1 durch einen Stern 12 in einem ersten Bereich und/oder an einer ersten Position innerhalb des Teilbereichs symbolisiert. Über unterschiedliche derartige erste Gesten werden unterschiedliche Eingaben, bspw. Befehle, ermöglicht, auf Grundlage derer entsprechende Funktionen ausgeführt werden, wobei jeweils einer bestimmten Funktion eine bestimmte Eingabe zugeordnet ist, der weiterhin eine bestimmte erste Geste zugeordnet ist. Eine derartige Funktion bzw. Aktion, die über die jeweilig zugeordnete erste Geste aktiviert und/oder ausgelöst wird, wird von mindestens einem Gerät des Fahrzeugs 2 durchgeführt.

Dabei ist einer bestimmten Eingabe bzw. einer bestimmten Funktion ursprünglich eine erste applizierte und/oder definierte Geste zugeordnet. Außerdem ist jeder Geste mindestens ein Signal und somit auch der ersten Geste mindestens ein erstes Signal zugeordnet, das von dem Sensor 6 zu der Recheneinheit 8 übermittelt wird, wobei die Recheneinheit 8 weiterhin veranlasst, dass die Funktion von dem mindestens einen Gerät ausgeführt wird.

Allerdings ist es möglich, dass aufgrund von Umwelteinflüssen eine Funktionstüchtigkeit des Sensors 6 hinsichtlich einer korrekten Erfassung der applizierten ersten Geste in einem für die erste Geste vorgesehenen Teilbereich beeinträchtigt ist. Eine derartige Beeinträchtigung der Funktionstüchtigkeit zum Erfassen der ersten Geste wird bei der Ausführungsform des Verfahrens anhand einer Qualität jenes ersten Signals beurteilt, das der ersten Geste zugeordnet ist und bei Erfassen der ersten Geste durch den Sensor 6 auch an die Recheneinheit 8 weiterzuleiten ist. Dabei ist es möglich, dass der Sensor 6 bei Erfassen der ersten Geste ein gegenüber dem ersten Signal gestörtes, bspw. verzerrtes Signal erzeugt und ausgibt. Falls sich nun ergibt, dass die Funktionstüchtigkeit zum Erfassen der ersten Geste nicht mehr gegeben ist, wird alternativ eine zweite Geste ausgewählt, appliziert und/oder definiert. Diese zweite Geste wird nunmehr der Eingabe, bspw. einem Befehl, und/oder der Funktion zugeordnet, wobei diese zweite Geste im Vergleich zu der ersten Geste von dem Sensor 6 einfacher und/oder zuverlässiger erfasst wird bzw. werden kann, da sie üblicherweise in einem anderen Teilbereich und/oder an einer anderen Position als die erste Geste darzustellen ist.

In Ausgestaltung wird von dem Sensor 6 ein Abbild einer jeweiligen Geste innerhalb des Bereichs, insbesondere in einem der jeweiligen Geste zugeordneten Teilbereich, erzeugt und an die Recheneinheit mit einem jeweiligen Signal übermittelt. Aufgrund einer Qualität des Abbilds kann alternativ oder ergänzend entschieden werden, ob die Funktionstüchtigkeit des Sensors 6 zum Erfassen der ersten Geste gegeben ist oder nicht. Hierzu kann ein aktuell erfasstes Abbild bzw. Ist-Abbild mit einem Soll-Abbild für die erste Geste verglichen werden, wobei die Funktionstüchtigkeit dann gegeben ist, wenn das Ist-Abbild dem das Soll-Abbild entspricht oder zumindest in einem das Soll-Abbild umfassenden Toleranzbereich liegt.

In weiterer Ausgestaltung kann die zweite Geste erst nach Feststellen der Funktionsuntüchtigkeit des Sensors bzgl. der ersten Geste der Eingabe zugeordnet werden. Alternativ oder ergänzend kann die zweite Geste bereits der Eingabe zugeordnet, als solche abrufbar hinterlegt, aber noch nicht aktiviert sein.

## Patentansprüche

1. Verfahren zum Erkennen einer bestimmten Eingabe einer Person (10) mit einem Sensor (6), wobei die bestimmte Eingabe durch mindestens eine der bestimmten Eingabe zugeordnete Geste der Person (10) von dem Sensor (6) erkannt wird, wobei mit dem Sensor (6) ein Algorithmus durchgeführt wird, mit dem Gesten erfasst und voneinander unterschieden werden, wobei ursprünglich eine erste Geste zum Erfassen der bestimmten Eingabe appliziert wird, die von dem Sensor (6) erfasst wird, wobei zunächst nur die erste Geste zum Erkennen der bestimmten Eingabe aktiv geschaltet ist, **dadurch gekennzeichnet, dass** eine Funktionstüchtigkeit des Sensors (6) zum Erfassen der ersten Geste überprüft wird, wobei für den Fall, dass die Funktionstüchtigkeit zum Erkennen der ersten Geste nicht gegeben ist, alternativ eine zweite Geste ausgewählt wird, die der bestimmten Eingabe zugeordnet ist oder wird, wobei zum Erkennen der bestimmten Eingabe durch den Sensor (6) von der ersten Geste auf die zweite Geste automatisch umgeschaltet wird, wobei die erste Geste inaktiv und die zweite Geste aktiv geschaltet wird, wobei in dem in dem Sensor (6) hinterlegten und bei Betrieb des Sensors (6) ablaufenden Algorithmus die erste Geste durch die zweite Geste ausgetauscht wird, wobei berücksichtigt wird, dass die Funktionstüchtigkeit des Sensors (6) von Umwelteinflüssen, die auf den Sensor (6) wirken, abhängig ist, wobei anhand eines aktuell herrschenden Umwelteinflusses, der auf den Sensor (6) wirkt, ermittelt wird, ob die Funktionstüchtigkeit des Sensors (6) zum Erfassen der ersten Geste gegeben ist oder nicht, wobei zum Erkennen der Umwelteinflüsse ein zusätzlicher Umweltsensor verwendet wird.

2. System zum Erkennen einer bestimmten Eingabe einer Person (10) mit einem Sensor (6), wobei das System (4) den Sensor (6) aufweist, der dazu ausgebildet ist, die bestimmte Eingabe durch Erfassen mindestens einer der bestimmten Eingabe zugeordneten Geste der Person (10) zu erkennen, wobei mit dem Sensor (6) ein Algorithmus durchgeführt wird, mit dem Gesten erfasst und voneinander unterschieden werden, wobei ursprünglich eine erste Geste zum Erkennen der bestimmten Eingabe zu applizieren ist, wobei der Sensor (6) dazu ausgebildet ist, die erste Geste zu erfassen, wobei zunächst nur die erste Geste zum Erkennen der bestimmten Eingabe aktiv geschaltet ist, **dadurch gekennzeichnet, dass** das System (4) dazu ausgebildet ist, eine Funktionstüchtigkeit des Sensors (6) zum Erfassen der ersten Geste zu überprüfen, wobei für den Fall, dass die Funktionstüchtigkeit zum Erfassen der ersten Geste nicht gegeben ist, das System (4) dazu ausgebildet ist, alternativ eine zweite Geste zum Erkennen der bestimmten Eingabe auszuwählen, der bestimmten Eingabe zuzuordnen und zum Erkennen der bestimmten Eingabe durch den Sensor (6) von der ersten Geste auf die zweite Geste automatisch umzuschalten, wobei die erste Geste inaktiv und die zweite Geste aktiv geschaltet wird, wobei in dem in dem Sensor (6) hinterlegten und bei Betrieb des Sensors (6) ablaufenden Algorithmus die erste Geste durch die zweite Geste ausgetauscht wird, wobei berücksichtigt wird, dass die Funktionstüchtigkeit des Sensors (6) von Umwelteinflüssen, die auf den Sensor (6) wirken, abhängig ist, wobei anhand eines aktuell herrschenden Umwelteinflusses, der auf den Sensor (6) wirkt, ermittelt wird, ob die Funktionstüchtigkeit des Sensors (6) zum Erfassen der ersten Geste gegeben ist oder nicht, wobei zum Erkennen der Umwelteinflüsse ein zusätzlicher Umweltsensor zu verwenden ist.

3. System nach Anspruch 2, das eine Recheneinheit (8) aufweist, die mit dem Sensor (6) verbunden ist, wobei der Sensor (6) dazu ausgebildet ist, in Reaktion auf ein Erfassen einer Geste mindestens ein der Geste zugeordnetes Signal zu erzeugen und an die Recheneinheit (10) zu übermitteln.

4. System nach Anspruch 3, bei dem die Recheneinheit (10) dazu ausgebildet ist, die zweite Geste auszuwählen und den Sensor (6) zum Erkennen der Eingabe von der ersten Geste auf die zweite Geste umzuschalten.

5. System nach einem der Ansprüche 2 bis 4, für ein Kraftfahrzeug (2).

## Claims

1. A method for recognizing a given input of a person (10) with a sensor (6), wherein the given input is recognized by the sensor (6) through at least one of the gestures of the person (10) assigned to the given input, wherein an algorithm is executed with the sensor (6) by which gestures are detected and differentiated from one another, wherein originally a first gesture is applied for detecting the given input, which is detected by the sensor (6), wherein first only the first gesture for recognizing the given input is set to active, **characterized in that** a proper functioning of the sensor (6) for detecting the first gesture is verified, wherein in the case that the proper functioning for recognizing the first gesture is not given, alternatively a second gesture is selected, which is or will be assigned to the given input, wherein for recognizing the given input through the sensor (6), automatic switching from the first to the second gesture occurs, wherein the first gesture is set to inactive and the second gesture is set to active, wherein in the algorithm that is stored in the sensor and is running during operation of the sensor (6), the first gesture is replaced by the second gesture, wherein it is taken into account that the proper functioning of the sensor (6) depends on environmental influences acting on the sensor (6), wherein it is determined based on a currently prevailing environmental influence that is acting on the sensor (6) whether the proper functioning of the sensor (6) for detecting the first gesture is given, or not, wherein an additional environmental sensor is used for recognizing the environmental influences.

2. A system for recognizing a given input of a person (10) with a sensor (6), wherein the system (4) has the sensor (6) that is configured for recognizing the given input by detecting at least one of the gestures of the person (10) assigned to the given input, wherein an algorithm is executed with the sensor (6) by which gestures are detected and differentiated from one another, wherein originally a first gesture for recognizing the given input is to be applied, wherein the sensor (6) is configured for detecting the first gesture, wherein first only the first gesture for recognizing the given input is set to active, **characterized in that** the system (4) is configured for verifying a proper functioning of the sensor (6) for detecting the first gesture, wherein in the case that the proper functioning for detecting the first gesture is not given, the system (4) is configured for selecting alternatively a second gesture for recognizing the given input, for assigning it to the given input, and for switching automatically from the first gesture to the second gesture for recognizing the given input through the sensor (6), wherein the first gesture is set to inactive and the second gesture is set to active, wherein in the algorithm that is stored in the sensor and is running during operation of the sensor (6), the first gesture is replaced by the second gesture, wherein it is taken into account that the proper functioning of the sensor (6) depends on environmental influences acting on the sensor (6), wherein it is determined based on a currently prevailing environmental influence that is acting on the sensor (6) whether the proper functioning of the sensor (6) for detecting the first gesture is given, or not, wherein an additional environmental sensor is to be used for recognizing the environmental influences.

3. The system according to claim 2 having a computing unit (8) that is connected to the sensor (6), wherein the sensor (6) is configured for generating in response to a detection of a gesture at least one signal assigned to the gesture and conveying it to the computing unit (10).

4. The system according to claim 3, in which the computing unit (10) is configured for selecting the second gesture and for switching the sensor (6) for recognizing the input from the first gesture to the second gesture.

5. The system according to one of claims 2 to 4 for a motor vehicle (2).

## Revendications

1. Procédé pour reconnaître une entrée déterminée d'une personne (10) avec un capteur (6), l'entrée déterminée étant reconnue par le capteur (6) par au moins un geste de la personne (10) associé à l'entrée déterminée, un algorithme étant exécuté avec le capteur (6), avec lequel des gestes sont détectés et différenciés les uns des autres, un premier geste étant effectué à l'origine pour détecter l'entrée déterminée, qui est détecté par le capteur (6), seul le premier geste étant d'abord rendu actif pour reconnaître l'entrée déterminée, **caractérisé en ce qu'**une capacité fonctionnelle du capteur (6) de détecter le premier geste est vérifiée, où, dans le cas où la capacité fonctionnelle de reconnaître le premier geste n'est pas assurée, un second geste, associé ou devenant associé à l'entrée déterminée, est sélectionné alternativement, la reconnaissance de l'entrée déterminée par le capteur (6) se faisant en passant automatiquement du premier geste au deuxième geste, le premier geste étant rendu inactif et le deuxième geste étant rendu actif, le premier geste étant remplacé par le deuxième geste dans l'algorithme enregistré dans le capteur (6) et se déroulant lors du fonctionnement du capteur (6), en tenant compte du fait que la capacité fonctionnelle du capteur (6) dépend d'influences environnementales agissant sur le capteur (6), une influence environnementale actuelle, qui agit sur le capteur (6), servant à déterminer si la capacité fonctionnelle du capteur (6) permet de reconnaître le premier geste ou non, un capteur environnemental supplémentaire étant utilisé pour reconnaître les influences environnementales.

2. Système pour reconnaître une entrée déterminée d'une personne (10) avec un capteur (6), le système (4) comprenant le capteur (6) conçu pour reconnaître l'entrée déterminée en détectant au moins un geste de la personne (10) associé à l'entrée déterminée, un algorithme étant exécuté avec le capteur (6), avec lequel des gestes sont détectés et différenciés les uns des autres, un premier geste devant être effectué à l'origine pour reconnaître l'entrée déterminée, le capteur (6) étant conçu pour détecter le premier geste, dans un premier temps seul le premier geste étant rendu actif pour reconnaître l'entrée déterminée, **caractérisé en ce que** le système (4) est conçu pour vérifier une capacité fonctionnelle du capteur (6) pour détecter le premier geste, le système (4) étant conçu, dans le cas où la capacité fonctionnelle de détecterle premier geste n'est pas assurée, pour sélectionner alternativement un deuxième geste pour reconnaître l'entrée déterminée, l'associer à l'entrée déterminée et passer automatiquement du premier geste au deuxième geste pour reconnaître l'entrée déterminée par le capteur (6), le premier geste étant rendu inactif et le deuxième geste étant rendu actif, le premier geste étant remplacé par le deuxième geste dans l'algorithme enregistré dans le capteur (6) et se déroulant lors du fonctionnement du capteur (6), en tenant compte du fait que la capacité fonctionnelle du capteur (6) dépend d'influences environnementales agissant sur le capteur (6), une influence environnementale actuelle, qui agit sur le capteur (6), servant à déterminer si la capacité fonctionnelle du capteur (6) permet de détecter le premier geste ou non, un capteur environnemental supplémentaire devant être utilisé pour reconnaître les influences environnementales.

3. Système selon la revendication 2, comprenant une unité de calcul (8) connectée au capteur (6), le capteur (6) étant conçu pour générer et transmettre à l'unité de calcul (10) au moins un signal associé au geste en réponse à la détection d'un geste.

4. Système selon la revendication 3, dans lequel l'unité de calcul (10) est conçue pour sélectionner le deuxième geste et faire passer le capteur (6) du premier geste au deuxième geste pour reconnaître l'entrée.

5. Système selon l'une quelconque des revendications 2 à 4, pour un véhicule automobile (2).
